# EUROPEAN PATENT APPLICATION

(11) **EP 4 624 524 A1**
(43) Date of publication of application: **01.10.2025**
(21) Application number: 23894865.7
(22) Date of filing: 02.11.2023
(51) Int. Cl.: C08L 23/10, C08L 23/26, C08K 9/08, C08K 7/14, C08K 5/521

(54) **THERMOPLASTIC RESIN COMPOSITION AND MOLDED ARTICLE PREPARED THEREFROM**

(30) Priority: 24.11.2022 KR 20220159503
(71) Applicant: LOTTE CHEMICAL CORPORATION, Seoul 05551 (KR)
(72) Inventor: LEE, Jin Seong, Uiwiang-si Gyeonggi-do 16073 (KR); KIM, Yoen Kyoung, Uiwiang-si Gyeonggi-do 16073 (KR)
(74) Representative: Germain Maureau
(86) International application number: PCT/KR2023/017354
(87) International publication number: WO 2024/111936

(57) **Abstract**

A thermoplastic resin composition of the present invention comprises: about 100 parts by weight of a polypropylene resin; about 30 to about 45 parts by weight of glass fibers surface-treated with polyolefin; about 50 to about 60 parts by weight of a phosphorus-nitrogen-based flame retardant comprising about 70 to about 90 percent by weight of piperazine pyrophosphate and about 10 to about 30 percent by weight of melamine polyphosphate; and about 1.5 to about 4.5 parts by weight of maleic anhydride-modified polypropylene. The thermoplastic resin composition has excellent flame retardancy (thin film flame retardancy and electrical flame retardancy), impact resistance, rigidity, extrudability, balance of the physical properties, and the like.

## Description

### [Technical Field]

The present invention relates to a thermoplastic resin composition and a molded article manufactured therefrom. More particularly, the present invention relates to a thermoplastic resin composition having good properties in terms of flame retardancy (thin film flame retardancy and electrical flame retardancy), impact resistance, rigidity, extrudability, property balance therebetween, and the like, and a molded article manufactured therefrom.

### [Background Art]

Polypropylene resins can be easily manufactured into injection molded products, films, and blow-molded products due to their good chemical resistance, weather resistance, and processability and are widely used in a variety of applications such as electrical components, automobiles, and building materials.

A polypropylene resin is inherently flammable due to its chemical structure, necessitating addition of various organic or inorganic flame retardants to impart flame retardancy thereto. However, due to growing environmental concerns and stricter regulations on existing halogen flame retardants, there is a growing need to reduce or eliminate the use of halogen flame retardants in thermoplastic resin compositions to ensure applicability of thermoplastic resin compositions as environmentally friendly materials.

However, the use of non-halogen flame retardants alone in thermoplastic resin compositions can cause significant decrease in flame retardancy compared to using halogen flame retardants. In addition, combination of non-halogen flame retardants with inorganic fillers to improve the flame retardancy and mechanical properties of olefin-based thermoplastic resin compositions can cause deterioration in extrudability and moldability.

Therefore, there is a need for a thermoplastic resin composition having good properties in terms of flame retardancy (thin film flame retardancy and electrical flame retardancy), impact resistance, rigidity, extrudability, property balance therebetween, and the like.

The background technique of the present invention is disclosed in Korean Patent Registration No. 10-1863421 and the like.

### [Disclosure]

### [Technical Problem]

It is one object of the present invention to provide a thermoplastic resin composition having good properties in terms of flame retardancy (thin film flame retardancy and electrical flame retardancy), impact resistance, rigidity, extrudability, property balance therebetween, and the like.

It is another object of the present invention to provide a molded article manufactured from the thermoplastic resin composition described above.

The above and other objects of the present invention will become apparent from the detailed description of the following embodiments.

### [Technical Solution]

1. One aspect of the present invention relates to a thermoplastic resin composition. The thermoplastic resin composition comprises: about 100 parts by weight of a polypropylene resin; about 30 parts by weight to about 45 parts by weight of glass fibers subjected to surface treatment with polyolefin; about 50 parts by weight to about 60 parts by weight of a phosphorus-nitrogen flame retardant comprising about 70 wt% to about 90 wt% of piperazine pyrophosphate and about 10 wt% to about 30 wt% of melamine polyphosphate; and about 1.5 parts by weight to about 4.5 parts by weight of a maleic anhydride-modified polypropylene.
2. In embodiment 1, the polypropylene resin may comprise at least one of a homopolypropylene resin, a block polypropylene resin, and a random polypropylene resin.
3. In embodiment 1 or 2, the glass fibers subjected to surface treatment with polyolefin may have a polyolefin content of about 0.3 wt% to about 1.7 wt%.
4. In embodiments 1 to 3, a polyolefin of the glass fibers subjected to surface treatment with polyolefin may comprise at least one of polypropylene and polyethylene.
5. In embodiments 1 to 4, the maleic anhydride-modified polypropylene may have a degree of graft of maleic anhydride in the range of about 0.5 wt% to about 3.0 wt%.
6. In embodiments 1 to 5, the maleic anhydride-modified polypropylene may have a melt-flow index of about 80 g/10 min to about 140 g/10 min, as measured at a temperature of 230°C under a load of 2.16 kg in accordance with ASTM D1238.
7. In embodiments 1 to 6, a weight ratio of the glass fibers subjected to surface treatment with polyolefin to the phosphorus-nitrogen flame retardant may range from about 1:1.2 to 1:2.
8. In embodiments 1 to 7, a weight ratio of the maleic anhydride-modified polypropylene to the glass fibers subjected to surface treatment with polyolefin may range from about 1:10 to about 1:20.
9. In embodiments 1 to 8, a weight ratio of the maleic anhydride-modified polypropylene to the phosphorus-nitrogen flame retardant may range from about 1:15 to about 1:30.
10. In embodiments 1 to 9, the thermoplastic resin composition may have a flame retardancy of V-0 or higher, as measured on a 0.8 mm thick injection molded specimen by the UL-94 vertical test method.
11. In embodiments 1 to 10, the thermoplastic resin composition may have a glow wire ignition temperature (GWIT) of about 750°C or more, as measured on a specimen having a size of 100 mm×100 mm× 1.5 mm in accordance with UL746A.
12. In embodiments 1 to 11, the thermoplastic resin composition may have a notched Izod impact strength of about 4 kgf·cm/cm to about 8 kgf·cm/cm, as measured on a 1/8" thick specimen in accordance with ASTM D256.
13. In embodiments 1 to 12, the thermoplastic resin composition may have a flexural modulus of about 48,000 kgf/cm² to about 60,000 kgf/cm², as measured on a 1/4" thick specimen at a crosshead speed of 2.8 mm/min in accordance with ASTM D790.
14. Another aspect of the present invention relates to a molded article. The molded article is manufactured from the thermoplastic resin composition according to any one of embodiments 1 to 13.

### [Advantageous Effects]

The present invention provides a thermoplastic resin composition having good properties in terms of flame retardancy (thin film flame retardancy and electrical flame retardancy), impact resistance, rigidity, extrudability, property balance therebetween, and the like.

### [Best Mode]

Hereinafter, embodiments of the present invention will be described in detail.

A thermoplastic resin composition according to the present invention comprises (A) a polypropylene resin; (B) glass fibers subjected to surface treatment with polyolefin; (C) a phosphorus-nitrogen flame retardant; and (D) a maleic anhydride-modified polypropylene.

As used herein to represent a specific numerical range, "a to b" means "a≤ and ≤b".

### (A) Polypropylene resin

The polypropylene resin according to one embodiment of the present invention serves to improve flame retardancy (thin film flame retardancy and electrical flame retardancy), impact resistance, rigidity, extrudability, property balance therebetween, and the like of the thermoplastic resin composition, when used together with the glass fibers subjected to surface treatment with polyolefin, a specific phosphorus-nitrogen flame retardant, and the maleic anhydride-modified polypropylene, and may include a polypropylene resin used in typical thermoplastic resin compositions.

In some embodiments, the polypropylene resin may comprise at least one of a homopolypropylene resin, a block polypropylene resin, and a random polypropylene resin. Here, the block polypropylene resin may include a block polypropylene resin comprising a homopolypropylene block and an ethylenepropylene copolymer block and/or a homopolyethylene block, and the random polypropylene resin may include a propylene-ethylene random copolymer.

In some embodiments, the polypropylene resin may comprise a mixture of about 10 wt% to about 90 wt% of the homopolypropylene resin and about 10 wt% to about 90 wt% of the block polypropylene resin.

In some embodiments, the polypropylene resin may have a melt-flow index (MI) of about 1 g/10 min to about 100 g/10 min, for example, about 5 g/10 min to about 80 g/10 min, as measured at a temperature of 230°C under a load of 2.16 kg in accordance with ASTM D1238. Within this range, the thermoplastic resin composition can be excellent in terms of mechanical properties, molding processability, extrusion processability, and the like.

### (B) Glass fibers subjected to surface treatment with polyolefin

The glass fibers according to one embodiment of the present invention serve to improve flame retardancy (thin film flame retardancy and electrical flame retardancy), impact resistance, rigidity, extrudability, property balance therebetween, and the like of the thermoplastic resin composition, when applied to the polypropylene resin together with a specific phosphorus-nitrogen flame retardant and the maleic anhydride-modified polypropylene, and may include glass fibers subjected to surface treatment with a polyolefin as a sizing agent.

In some embodiments, the polyolefin (sizing agent) may be present in an amount of about 0.3 wt% to about 1.7 wt%, for example, about 0.5 wt% to about 1.5 wt%, based on the total weight of the glass fibers subjected to surface treatment with polyolefin. Within this range, the thermoplastic resin composition can have good properties in terms of impact resistance, rigidity, appearance, and the like.

In some embodiments, the polyolefin (sizing agent) may comprise at least one of polypropylene and polyethylene.

In some embodiments, the glass fibers may be provided in fiber form and may have various shapes in cross-section, such as a circular shape, an oval shape, a rectangular shape, and the like. For example, using fibrous glass fibers with circular and/or rectangular cross-sections as the glass fibers may be advantageous in terms of mechanical properties.

In some embodiments, the glass fibers with a circular cross-section may have a cross-sectional diameter of about 5 µm to about 20 µm and a pre-processing length of about 2 mm to about 20 mm, as measured using a scanning electron microscope (SEM), and the glass fibers with a rectangular cross-section may have an aspect ratio (major cross-sectional diameter/minor cross-sectional diameter) of about 1.5 to about 10, a minor diameter of about 2 µm to about 10 µm, and a pre-processing length of about 2 mm to about 20 mm, as measured using a scanning electron microscope (SEM). Within these ranges, the thermoplastic resin composition can be excellent in terms of mechanical properties, appearance, and the like.

In some embodiments, the glass fibers subjected to surface treatment with polyolefin may be present in an amount of about 30 parts by weight to about 45 parts by weight, for example, about 35 parts by weight to about 41 parts by weight, relative to about 100 parts by weight of the polypropylene resin. If the content of the glass fibers subjected to surface treatment with polyolefin is less than about 30 parts by weight relative to about 100 parts by weight of the polypropylene resin, the thermoplastic resin composition can have poor properties in terms of impact resistance, rigidity, and the like, whereas, if the content of the glass fibers subjected to surface treatment with polyolefin exceeds about 45 parts by weight relative to about 100 parts by weight of the polypropylene resin, the thermoplastic resin composition can have poor properties in terms of flame retardancy (thin film flame retardancy and electrical flame retardancy), appearance, and the like.

### (C) Phosphorus-nitrogen flame retardant

The phosphorus-nitrogen flame retardant according to one embodiment of the present invention serves to improve flame retardancy (thin film flame retardancy and electrical flame retardancy), impact resistance, rigidity, extrudability, property balance therebetween, and the like of the thermoplastic resin composition, when applied to the polypropylene resin together with the glass fibers subjected to surface treatment with polyolefin and the maleic anhydride-modified polypropylene, and may include a phosphorus-nitrogen flame retardant comprising piperazine pyrophosphate and melamine polyphosphate.

In some embodiments, the phosphorus-nitrogen flame retardant may comprise about 70 wt% to about 90 wt%, for example, about 75 wt% to about 85 wt%, of the piperazine pyrophosphate and about 10 wt% to about 30 wt%, for example, about 15 wt% to about 25 wt%, of the melamine polyphosphate. If the content of the piperazine pyrophosphate is less than about 70 wt% (if the content of the melamine polyphosphate exceeds 30 wt%), the thermoplastic resin composition can have poor properties in terms of flame retardancy (thin film flame retardancy and electrical flame retardancy), impact resistance, and the like, whereas, if the content of the piperazine pyrophosphate exceeds about 90 wt% (if the content of the melamine polyphosphate is less than 10 wt%), the thermoplastic resin composition can have poor properties in terms of impact resistance, rigidity, extrudability, appearance, and the like.

In some embodiments, the phosphorus-nitrogen flame retardant may further comprise zinc oxide. The zinc oxide may be optionally present in an amount of about 0.5 parts by weight to about 3 parts by weight, for example, about 0.7 parts by weight to about 2.5 parts by weight, relative to about 100 parts by weight of the phosphorus-nitrogen flame retardant. Within this range, the thermoplastic resin composition can have further improved properties in terms of flame retardancy, extrudability, appearance, and the like.

In some embodiments, the phosphorus-nitrogen flame retardant may be present in an amount of about 50 parts by weight to about 60 parts by weight, for example, about 53 parts by weight to about 59 parts by weight, relative to about 100 parts by weight of the polypropylene resin. If the content of the phosphorus-nitrogen flame retardant is less than about 50 parts by weight relative to about 100 parts by weight of the polypropylene resin, the thermoplastic resin composition can have poor properties in terms of flame retardancy (thin film flame retardancy and electrical flame retardancy), rigidity, and the like, whereas, if the content of the phosphorus-nitrogen flame retardant exceeds about 60 parts by weight relative to about 100 parts by weight of the polypropylene resin, the thermoplastic resin composition can have poor properties in terms of impact resistance, extrudability, appearance, and the like.

In some embodiments, the glass fibers subjected to surface treatment with polyolefin and the phosphorus-nitrogen flame retardant may be present in a weight ratio (glass fibers subjected to surface treatment with polyolefin:phosphorus-nitrogen flame retardant) of about 1:1.2 to about 1:2 for example, about 1:1.3 to about 1:1.8. Within this range, the thermoplastic resin composition (and a molded article manufactured therefrom) can be further improved in terms of mechanical properties, flame retardancy, and the like.

### (D) Maleic anhydride-modified polypropylene

The maleic anhydride-modified polypropylene according to one embodiment of the present invention serves to improve flame retardancy (thin film flame retardancy and electrical flame retardancy), impact resistance, rigidity, extrudability, property balance therebetween, and the like of the thermoplastic resin composition, when applied to the polypropylene resin together with the glass fibers subjected to surface treatment with polyolefin and the phosphorus-nitrogen flame retardant, and may include a maleic anhydride-modified polypropylene obtained by polymerizing (grafting) maleic anhydride with (to) polypropylene.

In some embodiments, the maleic anhydride-modified polypropylene may have a degree of graft of maleic anhydride in the range of about 0.5 wt% to about 3 wt%, for example, about 0.7 wt% to about 2.8 wt%. Within this range, the thermoplastic resin composition can have good properties in terms of impact resistance, flame resistance, injection moldability, and the like.

In some embodiments, the maleic anhydride-modified polypropylene may have a melt-flow index of about 80 g/10 min to about 140 g/10 min, for example, about 100 g/10 min to about 120 g/10 min, as measured at a temperature of 230°C under a load of 2.16 kg in accordance with ASTM D1238. Within this range, the thermoplastic resin composition can have good properties in terms of flame retardancy, and the like.

In some embodiments, the maleic anhydride-modified polypropylene may be present in an amount of about 1.5 parts by weight to about 4.5 parts by weight, for example, about 2 parts by weight to about 3.6 parts by weight, relative to about 100 parts by weight of the polypropylene resin. If the content of the maleic anhydride-modified polypropylene is less than about 1.5 parts by weight relative to about 100 parts by weight of the polypropylene resin, the thermoplastic resin composition can have poor properties in terms of flame retardancy, impact resistance, rigidity, and the like, whereas, the content of the maleic anhydride-modified polypropylene exceeds about 4.5 parts by weight relative to about 100 parts by weight of the polypropylene resin, the thermoplastic resin composition can have poor properties in terms of flame retardancy, injection moldability, and the like.

In some embodiments, the maleic anhydride-modified polypropylene and the glass fibers subjected to surface treatment with polyolefin may be present in a weight ratio (maleic anhydride-modified polypropylene:glass fibers subjected to surface treatment with polyolefin) of about 1:10 to about 1:20, for example, about 1:12 to about 1:20. Within this range, the thermoplastic resin composition (and a molded article manufactured therefrom) can have further improved properties in terms of impact resistance, flame retardancy, injection moldability, and the like.

In some embodiments, the maleic anhydride-modified polypropylene and the phosphorus-nitrogen flame retardant may be present in a weight ratio (maleic anhydride-modified polypropylene:phosphorus-nitrogen flame retardant) of about 1:15 to about 1:30, for example, about 1:17 to about 1:29. Within this range, the thermoplastic resin composition (and a molded article manufactured therefrom) can have further improved properties in terms of impact resistance, flame retardancy, injection moldability, and the like.

The thermoplastic resin composition according to one embodiment of the present invention may further comprise additives used in typical polypropylene resin compositions. The additives may include, for example, anti-dripping agents, antioxidants, surfactants, lubricants, release agents, nucleating agents, stabilizers, pigments, dyes, and mixtures thereof, without being limited thereto.

In some embodiments, the additives may be optionally present in an amount of about 0.001 parts by weight to about 40 parts by weight, for example, about 0.1 parts by weight to about 10 parts by weight, relative to about 100 parts by weight of the polypropylene resin.

The thermoplastic resin composition according to one embodiment of the present invention may be prepared in pellet form by mixing the aforementioned components, followed by melt extrusion in a typical twin-screw extruder at a temperature of about 180°C to about 280°C, for example, about 200°C to about 260°C.

In some embodiments, the thermoplastic resin composition may have a flame retardancy of V-0 or higher, as measured on a 0.8 mm thick injection molded specimen by the UL-94 vertical test method.

In some embodiments, the thermoplastic resin composition may have a glow wire ignition temperature (GWIT) of about 750°C or more, for example, about 750°C to about 790°C, as measured on a specimen having a size of 100 mm×100 mm×1.5 mm in accordance with UL746A.

In some embodiments, the thermoplastic resin composition may have a notched Izod impact strength of about 4 kgf·cm/cm to about 8 kgf·cm/cm, for example, about 4.5 kgf·cm/cm to about 7 kgf·cm/cm, as measured on a 1/8" thick specimen in accordance with ASTM D256.

In some embodiments, the thermoplastic resin composition may have a flexural modulus of about 48,000 kgf/cm² to about 60,000 kgf/cm², for example, about 49,000 kgf/cm² to about 58,000 kgf/cm², as measured on a 1/4" thick specimen at a crosshead speed of 2.8 mm/min in accordance with ASTM D790.

A molded product according to the present invention is formed of the thermoplastic resin composition described above. The thermoplastic resin composition may be prepared in pellet form. The prepared pellets may be manufactured into various molded articles (products) by various molding methods, such as injection molding, extrusion, vacuum molding, casting, and the like. These molding methods are well known to a person having ordinary knowledge in the art to which the present invention pertains.

The molded article according to the present invention has good properties in terms of flame retardancy (thin film flame retardancy and electrical flame retardancy), impact resistance, rigidity, extrudability, property balance therebetween, and the like. Accordingly, the molded article is useful for products requiring flame retardancy, for example, home appliance housings, power supply boxes, and the like.

### [Mode for Invention]

Next, the present invention will be described in more detail with reference to some examples. However, it should be noted that these examples are provided for illustration only and are not to be construed in any way as limiting the present invention.

### EXAMPLE

Details of components used in Examples and Comparative Examples are as follows:
(A) Polypropylene resin
   A mixture of 72 wt% of a homopolypropylene resin (product name: HA5034, manufacturer: PolyMirae) and 28 wt% of a block polypropylene resin (product name: JSS350N, manufacturer: Lotte Chemical) was used.
(B) Glass fibers
   (B1) Glass fibers subjected to surface treatment with polypropylene (product name: ECS11-03-508C, manufacturer: JUSHI) were used.
   (B2) Glass fibers not subjected to surface treatment (product name: T249, manufacturer: NEG) were used.
(C) Phosphorus-nitrogen flame retardant
   (C1) A mixture comprising 80 wt% of piperazine pyrophosphate (Cas No.: 66034-17-1, manufacturer: Hainan Zhongxin Chemical) and 20 wt% of melamine polyphosphate (product name: Melapur 200, manufacturer: BASF) was used.
   (C2) A mixture comprising 75 wt% of the piperazine pyrophosphate and 25 wt% of the melamine polyphosphate was used.
   (C3) A mixture comprising 85 wt% of the piperazine pyrophosphate and 15 wt% of the melamine polyphosphate was used.
   (C4) A mixture comprising 65 wt% of the piperazine pyrophosphate and 35 wt% of the melamine polyphosphate was used.
   (C5) A mixture comprising 95 wt% of the piperazine pyrophosphate and 5 wt% of the melamine polyphosphate was used.
(D) Maleic anhydride modified polyolefin
   (D1) A maleic anhydride-modified polypropylene (product name: CHEMS MP600PP, manufacturer: Chemko S.C.) was used.
   (D2) A maleic anhydride-modified polystyrene (product name: SMA-725, manufacturer: Jiaxing Huawen Chemical) was used.

### Examples 1 to 9 and Comparative Examples 1 to 10

The aforementioned components were mixed in amounts as listed in Tables 1, 2, 3, and 4, followed by extrusion at 200°C, thereby preparing a thermoplastic resin composition in pellet form. Here, extrusion was performed using a twin-screw extruder (L/D: 36, diameter: 45 mm). The prepared pellets were dried at 80°C for 2 hours or more and then subjected to injection molding using a 6 oz. injection molding machine (molding temperature: 210°C, mold temperature: 60°C), thereby preparing a specimen. The prepared specimen was evaluated as to the following properties. Results are shown in Tables 1, 2, 3, and 4.

### Property evaluation

(1) Thin film flame retardancy: Flame retardancy was measured on a 0.8 mm thick injection molded specimen by the UL-94 vertical test method. (B.O: burn out)
(2) Electrical flame retardancy: Glow wire ignition temperature (GWIT) (unit: °C) was measured on a specimen having a size of 100 mm×100 mm×1.5 mm in accordance with UL746A.
(3) Notched Izod impact strength (unit: kgf·cm/cm): Notched Izod impact strength was measured on a 1/8" thick specimen in accordance with ASTM D256.
(4) Flexural modulus (unit: kgf/cm²): Flexural modulus was measured on a 1/4" thick specimen at a crosshead speed of 2.8 mm/min in accordance with ASTM D790.
(5) Extrudability: The surface of each of the thermoplastic resin compositions extruded in strand form was examined with the naked eye. When no breaks or discontinuities were observed in the strands despite formation of agglomerations (protrusions) on the strands, a corresponding resin composition was evaluated as "good", whereas, when any breaks or discontinuities were observed in the strands, a corresponding resin composition was evaluated as "poor".

**Table 1**

| | Example | | | | |
|---|---|---|---|---|---|
| | 1 | 2 | 3 | 4 | 5 |
| (A) parts by weight | 100 | 100 | 100 | 100 | 100 |
| (B1) (parts by weight) | 35 | 39 | 41 | 39 | 39 |
| (B2) (parts by weight) | - | - | - | - | - |
| (C1) (parts by weight) | 57 | 57 | 57 | 53 | 59 |
| (C2) (parts by weight) | - | - | - | - | - |
| (C3) (parts by weight) | - | - | - | - | - |
| (C4) (parts by weight) | - | - | - | - | - |
| (C5) (parts by weight) | - | - | - | - | - |
| (D1) (parts by weight) | 2.8 | 2.8 | 2.8 | 2.8 | 2.8 |
| (D2) (parts by weight) | - | - | - | - | - |
| Flame retardancy (0.8 mm) | V-0 | V-0 | V-0 | V-0 | V-0 |
| GWIT (°C) | 760 | 760 | 760 | 755 | 765 |
| Notched Izod impact strength (kgf·cm/cm) | 5.3 | 5.5 | 5.5 | 5.7 | 5.3 |
| Flexural modulus (kgf/cm2) | 51,000 | 52,000 | 52,000 | 51,500 | 52,300 |
| Extrudability | Good | Good | Good | Good | Good |

**Table 2**

| | Example | | | |
|---|---|---|---|---|
| | 6 | 7 | 8 | 9 |
| (A) parts by weight | 100 | 100 | 100 | 100 |
| (B1) (parts by weight) | 39 | 39 | 39 | 39 |
| (B2) (parts by weight) | - | - | - | - |
| (C1) (parts by weight) | - | - | 57 | 57 |
| (C2) (parts by weight) | 57 | - | - | - |
| (C3) (parts by weight) | - | 57 | - | - |
| (C4) (parts by weight) | - | - | - | - |
| (C5) (parts by weight) | - | - | - | - |
| (D1) (parts by weight) | 2.8 | 2.8 | 2 | 3.6 |
| (D2) (parts by weight) | - | - | - | - |
| Flame retardancy (0.8 mm) | V-0 | V-0 | V-0 | V-0 |
| GWIT (°C) | 760 | 760 | 760 | 760 |
| Notched Izod impact strength (kgf·cm/cm) | 5.5 | 5.6 | 5.3 | 6.2 |
| Flexural modulus (kgf/cm2) | 51,500 | 51,800 | 51,000 | 54,000 |
| Extrudability | Good | Good | Good | Good |

**Table 3**

| | Comparative Exam ple | | | | |
|---|---|---|---|---|---|
| | 1 | 2 | 3 | 4 | 5 |
| (A) parts by weight | 100 | 100 | 100 | 100 | 100 |
| (B1) (parts by weight) | 25 | 50 | - | 39 | 39 |
| (B2) (parts by weight) | - | - | 39 | - | - |
| (C1) (parts by weight) | 57 | 57 | 57 | 45 | 65 |
| (C2) (parts by weight) | - | - | - | - | - |
| (C3) (parts by weight) | - | - | - | - | - |
| (C4) (parts by weight) | - | - | - | - | - |
| (C5) (parts by weight) | - | - | - | - | - |
| (D1) (parts by weight) | 2.8 | 2.8 | 2.8 | 2.8 | 2.8 |
| (D2) (parts by weight) | - | - | - | - | - |
| Flame retardancy (0.8 mm) | V-0 | B.O | V-0 | B.O | V-0 |
| GWIT (°C) | 765 | 700 | 760 | 700 | 775 |
| Notched Izod impact strength (kgf·cm/cm) | 2.5 | 5 | 3 | 6 | 2.5 |
| Flexural modulus (kgf/cm2) | 35,000 | 65,000 | 40,000 | 45,000 | 52,000 |
| Extrudability | Good | Good | Good | Good | Poor |

**Table 4**

| | Comparative Example | | | | |
|---|---|---|---|---|---|
| | 6 | 7 | 8 | 9 | 10 |
| (A) parts by weight | 100 | 100 | 100 | 100 | 100 |
| (B1) (parts by weight) | 39 | 39 | 39 | 39 | 39 |
| (B2) (parts by weight) | - | - | - | - | - |
| (C1) (parts by weight) | - | - | 57 | 57 | 57 |
| (C2) (parts by weight) | 57 | - | - | - | - |
| (C3) (parts by weight) | - | 57 | - | - | - |
| (C4) (parts by weight) | 2.8 | 2.8 | 1 | 5 | - |
| (C5) (parts by weight) | - | - | - | - | 2.8 |
| (D1) (parts by weight) | B.O | V-0 | B.O | B.O | B.O |
| (D2) (parts by weight) | 745 | 760 | 750 | 750 | 750 |
| Flame retardancy (0.8 mm) | 3 | 2 | 3 | 6 | 3 |
| GWIT (°C) | 50,000 | 42,000 | 42,000 | 53,000 | 40,000 |
| Notched Izod impact strength (kgf·cm/cm) | Good | Poor | Good | Good | Poor |

From the above results, it could be seen than the thermoplastic resin compositions according to the present invention had good properties in terms of flame retardancy (thin film flame retardancy and electrical flame retardancy), impact resistance (notched Izod impact strength), rigidity (flexural modulus), extrudability, and the like.

Conversely, it could be seen that the thermoplastic resin composition of Comparative Example 1 prepared using an insufficient amount of the glass fibers subjected to surface treatment with polyolefin suffered from deterioration in impact resistance, rigidity, and the like, the thermoplastic resin composition of Comparative Example 2 prepared using an excess of the glass fibers subjected to surface treatment with polyolefin suffered from deterioration in flame retardancy (thin film flame retardancy and electrical flame retardancy), and the like, and the thermoplastic resin composition of Comparative Example 3 prepared using glass fibers B2 instead of the glass fibers subjected to surface treatment with polyolefin according to the present invention suffered from deterioration in impact resistance, rigidity, and the like. It could be seen that the thermoplastic resin composition of Comparative Example 4 prepared using an insufficient amount of the phosphorus-nitrogen flame retardant suffered from deterioration in flame retardancy (thin film flame retardancy and electrical flame retardancy), rigidity, and the like, the thermoplastic resin composition of Comparative Example 5 prepared using an excess of the phosphorus-nitrogen flame retardant suffered from deterioration in impact resistance, extrudability, and the like, the thermoplastic resin composition of Comparative Example 6 prepared using phosphorus-nitrogen flame retardant C4 instead of the phosphorus-nitrogen flame retardant according to the present invention suffered from deterioration in flame retardancy (thin film flame retardancy and electrical flame retardancy), impact resistance, and the like, and the thermoplastic resin composition of Comparative Example 7 prepared using phosphorus-nitrogen flame retardant C5 suffered from deterioration in impact resistance, rigidity, extrudability, and the like. In addition, it could be seen that the thermoplastic resin composition of Comparative Example 8 prepared using an insufficient amount of the maleic anhydride-modified polypropylene suffered from deterioration in flame retardancy (thin film flame retardancy), impact resistance, rigidity, and the like, the thermoplastic resin composition of Comparative Example 9 prepared using an excess of the maleic anhydride-modified polypropylene suffered from deterioration in flame retardancy (thin film flame retardancy) and the like, and the thermoplastic resin composition of Comparative Example 10 prepared using maleic anhydride-modified polyethylene D2 instead of the maleic anhydride-modified polypropylene according to the present invention suffered from deterioration in flame retardancy (thin film flame retardancy), impact resistance, rigidity, extrudability, and the like.

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

1. A thermoplastic resin composition comprising:
about 100 parts by weight of a polypropylene resin;
about 30 parts by weight to about 45 parts by weight of glass fibers subjected to surface treatment with polyolefin;
about 50 parts by weight to about 60 parts by weight of a phosphorus-nitrogen flame retardant comprising about 70 wt% to about 90 wt% of piperazine pyrophosphate and about 10 wt% to about 30 wt% of melamine polyphosphate; and
about 1.5 parts by weight to about 4.5 parts by weight of a maleic anhydride-modified polypropylene.

2. The thermoplastic resin composition according to claim 1, wherein the polypropylene resin comprises at least one of a homopolypropylene resin, a block polypropylene resin, and a random polypropylene resin.

3. The thermoplastic resin composition according to claim 1 or 2, wherein the glass fibers subjected to surface treatment with polyolefin has a polyolefin content of about 0.3 wt% to about 1.7 wt%.

4. The thermoplastic resin composition according to any one of claims 1 to 3, wherein a polyolefin of the glass fibers subjected to surface treatment with polyolefin comprises at least one of polypropylene and polyethylene.

5. The thermoplastic resin composition according to any one of claims 1 to 4, wherein the maleic anhydride-modified polypropylene has a degree of graft of maleic anhydride in the range of about 0.5 wt% to about 3.0 wt%.

6. The thermoplastic resin composition according to any one of claims 1 to 5, wherein the maleic anhydride-modified polypropylene has a melt-flow index of about 80 g/10 min to about 140 g/10 min, as measured at a temperature of 230°C under a load of 2.16 kg in accordance with ASTM D1238.

7. The thermoplastic resin composition according to any one of claims 1 to 6, wherein a weight ratio of the glass fibers subjected to surface treatment with polyolefin to the phosphorus-nitrogen flame retardant ranges from about 1:1.2 to 1:2.

8. The thermoplastic resin composition according to any one of claims 1 to 7, wherein a weight ratio of the maleic anhydride-modified polypropylene to the glass fibers subjected to surface treatment with polyolefin ranges from about 1:10 to about 1:20.

9. The thermoplastic resin composition according to any one of claims 1 to 8, wherein a weight ratio of the maleic anhydride-modified polypropylene to the phosphorus-nitrogen flame retardant ranges from about 1:15 to about 1:30.

10. The thermoplastic resin composition according to any one of claims 1 to 9, wherein the thermoplastic resin composition has a flame retardancy of V-0 or higher, as measured on a 0.8 mm thick injection molded specimen by the UL-94 vertical test method.

11. The thermoplastic resin composition according to any one of claims 1 to 10, wherein the thermoplastic resin composition has a glow wire ignition temperature (GWIT) of about 750°C or more, as measured on a specimen having a size of 100 mm×100 mm×1.5 mm in accordance with UL746A.

12. The thermoplastic resin composition according to any one of claims 1 to 11, wherein the thermoplastic resin composition has a notched Izod impact strength of about 4 kgf·cm/cm to about 8 kgf·cm/cm, as measured on a 1/8" thick specimen in accordance with ASTM D256.

13. The thermoplastic resin composition according to any one of claims 1 to 12, wherein the thermoplastic resin composition has a flexural modulus of about 48,000 kgf/cm² to about 60,000 kgf/cm², as measured on a 1/4" thick specimen at a crosshead speed of 2.8 mm/min in accordance with ASTM D790.

14. A molded article manufactured from the thermoplastic resin composition according to any one of claims 1 to 13.
